# EUROPEAN PATENT SPECIFICATION

(11) **EP 3 698 953 B1**
(45) Date of publication and mention of the grant of the patent: **26.07.2023**
(21) Application number: 20158438.0
(22) Date of filing: 20.02.2020
(51) Int. Cl.: B29C 70/52, B29C 70/20, B29C 70/22, B29D 99/00, B32B 3/04, B32B 3/12, B32B 5/02, B32B 5/26, B29L 31/60

(54) **A HONEYCOMB CLOSED CELLULAR COMPOSITE PRODUCT WITH ROBUST IMPACT STRENGTH; METHODS FOR MANUFACTURING THEREOF**
WABENFÖRMIGES, GESCHLOSSENZELLIGES VERBUNDPRODUKT MIT ROBUSTER SCHLAGZÄHIGKEIT, VERFAHREN ZU SEINER HERSTELLUNG
PRODUIT COMPOSITE CELLULAIRE FERMÉ EN NID D'ABEILLES AYANT UNE RÉSISTANCE ROBUSTE AUX CHOCS, PROCÉDÉS DE FABRICATION ASSOCIÉS

(30) Priority: 24.02.2019 IN 201821031691
(43) Date of publication of application: 26.08.2020
(73) Proprietor: SP Advanced Engineering Materials PVT. Ltd., Fort Mumbai Maharashtra 400023 (IN)
(72) Inventor: Mukherji, Arindam, 400 607 Thane (West) (IN)
(74) Representative: Barker Brettell LLP

(56) References cited:
- EP-A1- 1 118 735
- WO-A2-2017/216809
- BE-A- 664 896
- CN-A- 101 871 564
- JP-A- H0 899 366
- JP-A- 2018 176 675

## Description

The present invention is an improvement over the composite product claimed in Indian Patent Application No. 201621020446 filed on June 15th, 2016 and the related PCT publication WO2017/216809 published December 21st 2017.

The present invention relates to a honeycomb closed cellular composite product having a robust impact resistance. The product is defined in claims 1 to 11 and consists essentially of multiple layers of a synthetic polyester felt impregnated with a resin system and multiple layers of synthetic glass fabric, impregnated with a resin system, wherein the synthetic glass fabric is bi-directionally and/or uni-directionally oriented. The layers are arranged to form a core and an encapsulating layer. The core comprises non-spaced-apart closed cellular polygonal columnar units, particularly hexagonal columnar units, stacked alongside one another, and these can act to fill the void of the core. The core comprises multiple layers of the synthetic polyester felt and of the synthetic glass fabric. The encapsulating layer comprises multiple layers of the synthetic polyester felt and of the synthetic glass fabric. Preferably the product has at least 50 % void vol./vol. and preferably also has robust impact resistance whilst being a low cost and a lightweight product.

The present invention also relates to a pultrusion apparatus as defined in claims 12 and 13.

The present invention also relates to a pultrusion method for the production of the honeycomb closed cellular composite product as defined in claims 14 and 15; wherein preferably said method reduces manufacturing cost as it uses waste plastic, reduces environmental impact and improves the impact resistance of the composite product with high endurance in adverse environmental conditions.

The honeycomb closed cellular composite product of the present invention may have beneficial properties, namely: robust impact resistance, low stress, shock-proof. The honeycomb closed cellular composite product can be utilised in the applications such as aerospace, automotive, construction, and to impede impactor or projectiles travelling at high speed, etc.

### BACKGROUND OF THE INVENTION:

The present Indian Patent Application relates to an improvement of Indian Patent Application No. 3985/MUM/2015 filed on 21^{st} Oct 2015 (and the related PCT publication WO2017/068602 published April 27th 2017) and Indian Patent Application No. 201621020446 filed on 15th Jun 2016 (and the related PCT publication WO2017/216809 published December 21st 2017).

The honeycomb structural material is commonly made by layering honeycomb cells between two thin layers forming a plate-like assembly. These materials are well known for their high specific strength, and they are widely used in the aerospace industry for this reason. They are commonly made from materials like aluminum, fiberglass and advanced composite materials have been featured in aircraft and rockets since the 1950s.

The basic advantage of geometry of honeycomb is the use of minimum material for the construction leading to light weight product and reducing the cost substantially. A honeycomb shaped structure provides a material with minimal density and relatively high out-of-plane compression properties and out-of-plane shear properties.

Expansion, corrugation, and molding are the three traditional honeycomb production techniques for non-sandwich applications since 1901. Today honeycomb cores are manufactured via the expansion process and the corrugation process from composite materials such as glass-reinforced plastic (also known as fiberglass), carbon fiber reinforced plastic, Nomex aramide paper reinforced plastic, or from a metal (usually aluminum).

Honeycombs from metals (like aluminum) are today produced by the expansion process. Continuous processes of folding honeycombs from a single aluminum sheet after cutting slits had been developed already around 1920 (US1389294). Continuous in-line production of metal honeycomb can be done from metal rolls by cutting and bending. However, the aluminum honeycomb is heavy or bulky and is having poor impact resistance to high-speed impactor or projectile. Thus, this may not be sufficient to be used in aerospace, automotive, construction, etc.

Thermoplastic honeycomb cores (usually from polypropylene) are usually made by an extrusion process via a block of extruded profiles or extruded tubes from which the honeycomb sheets are sliced.

The composite product disclosed in Indian Patent Application No. 201621020446 filed on June 15th, 2016 (and the related PCT publication WO2017/216809 published December 21st 2017) has impact strength in the range of 50 to 79 Mpa. This is not sufficient for certain applications which need to impede impactor or projectile travelling at high speed or in aerospace, automotive, construction, etc.

Accordingly, there is a long felt need to develop a honeycomb closed cellular product having robust impact resistance yet also being light weight and lower in cost. There is also a long felt need to develop a fast and simple, yet technically improved and economically significant, method of producing honeycomb closed cellular composites, giving rise to improved products having uniform mechanical properties, being light weight with enhanced tensile and bending strength, and robust impact resistance subject to dynamic application, including impeding impactor or projectile travelling at high speed or aerospace, or automotive or construction, etc.

BE664896 (STYRA) relates to processes and machines for the manufacture of profiles reinforced with fibres. JPH0899366 (SEKISUI CHEMICAL CO LTD) describes a method of producing a moulded body. JP2018176675 (MAEDA CONSTRUCTION) describes a method for the production of a construction member. CN101871564 (WUXI BAMOOD SCIENCE AND TECHNOLOGY CO LTD) describes a wood-glass fabric glass fibre reinforced plastics composite engineering material and a product pultrusion method. EP1118735 (HUSSOR S A) describes a shuttering system that consists of a panel and a platform produced by pultrusion from a thermo-setting or thermoplastic resin reinforced with mineral and/or organic and/or chemical fibres, and a guard rail assembly of tubes, also made by pultrusion.

### OBJECTS OF THE INVENTION:

An object of the invention is to provide a honeycomb closed cellular composite product having a robust impact resistance, yet being light weight and low cost.

Another object of the invention is to provide the honeycomb closed cellular composite product which utilizes waste plastics or polyester.

Yet another object of the invention is to provide the honeycomb closed cellular composite product that reduces environmental impact.

Still another object of the invention is to provide the honeycomb closed cellular composite product with improved low ratio of weight to strength.

Yet still another object of the invention is to provide the honeycomb closed cellular composite product eliminating use of conventional glass roving and overcoming the limitation of jamming of glass roving in resin bath.

Yet still another object of the invention is to provide the honeycomb closed cellular composite product with robust impact resistance and its use in dynamic applications including impeding impactor or projectile travelling at high speed or in aerospace, automotive or construction, etc.

An additional object of the invention is to provide a continuous or a batch pultrusion method for production of the honeycomb closed cellular composite product with robust impact resistance. Preferably said process is reducing manufacturing cost, reducing environmental impact and improving composite product, which can be used in dynamic applications including impeding impactor or projectile travelling at high speed or in aerospace, automotive or construction, etc.

### SUMMARY OF THE INVENTION

The present invention provides, in a first aspect, a honeycomb closed-cellular composite product as defined in claims 1 to 11. In a second aspect, there is provided a pultrusion apparatus suitable for continuous or batch production of the composite product of the first aspect; this apparatus is defined in claims 12 and 13. In a third aspect, there is provided a pultrusion method for production of the composite product of the first aspect, by using the pultrusion apparatus of the second aspect; this method is defined in claims 14 and 15.

### BRIEF DESCRIPTION OF THE ACCOMPANYING DRAWINGS:

Figure 1 illustrates a profile of the honeycomb closed cellular composite product.
Figure 2 illustrates a cross-section view of the profile of the honeycomb closed cellular composite product.
Figure 3 illustrates a pultrusion apparatus for a continuous or a batch production of the honeycomb closed cellular composite product; particularly profiles as shown in Fig.1 and Fig. 2.
Figure 4 illustrates an exploded view of the pultrusion die having floating mandrel.

### DETAILED DESCRIPTION OF THE INVENTION:

Before the present invention is described, it is to be understood that unless defined otherwise, all technical and scientific terms used herein have the same meaning as commonly understood by one of ordinary skill in the art to which this invention belongs. Unless stated to the contrary, any use of the words such as "including," "containing," "comprising," "having" and the like, means "including without limitation" shall not be construed to limit any general statement that it follows to the specific or similar items or matters immediately following it. Embodiments of the invention are not mutually exclusive, but may be implemented in various combinations. The described embodiments of the invention and the disclosed examples are given for the purpose of illustration rather than limitation of the invention as set forth the appended claims. Further the terms disclosed embodiments are merely exemplary methods of the invention, which may be embodied in various forms.

It is also to be understood that the terms "a", "an", "the" and like are words for the sake of convenience and are not to be construed as limiting terms. Moreover, it will be understood that the illustrations are for the purpose of describing a particular exemplary embodiment of the invention and are not limited to the invention thereto.

The term "fibers" or "fiber" or "fabric" or "fabrics" are interchangeable and intend to cover single as well as plural fiber or fabric.

The unit "%" of the void volume or component means to interpret % volume of void or component by volume of the composite product.

According to the invention, there is provided a honeycomb closed cellular composite product according to claim 1.

The closed-cellular polygonal columnar units are elongate (columnar) units that each have a cross section that is a polygonal shape that provides a closed cell. These are stacked alongside one another with no spaces (non-spaced-apart) such that a honeycomb network of closed cells (units) is provided.

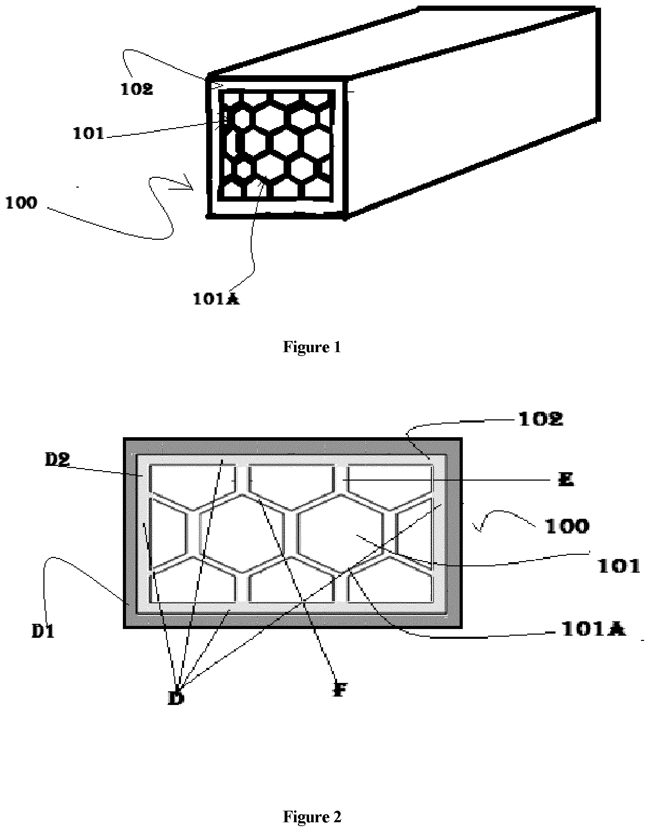

The encapsulating layer is located outside and encloses the core, as can be seen in Figure 1. It is suitably located around the core along its length but not its ends. It can be viewed as defining the void of the core. This void of the core is filled with the non-spaced-apart closed-cellular polygonal columnar units stacked alongside one another. These columnar units fill the void of the core such that it has a cross-section filled with honeycomb units (or cells). As shown in the examples, there can be different numbers of honeycomb units (or cells), such as from 7 to 27 honeycomb units (or cells), e.g. 10 honeycomb units (or cells). Other numbers of honeycomb units (or cells) could also be used, e.g. from 6 to 50.

The encapsulating layer is elongate so that it can encapsulate the columnar units along their elongate length. In one embodiment, the operative height of the stack of columnar units is equal to the operative height of the core. In other words, the encapsulating layer and the columnar units have the same dimension along their elongate length.

In one embodiment, the columnar units are stacked alongside one another to fill the void of the core, i.e. such that it has a cross-section filled with honeycomb units (or cells), wherein the void of the core is the space enclosed in the encapsulating layer, and the product has at least 50 % (vol. /vol.) voids.

It will be understood that the honeycomb units (or cells) as provided by the closed-cellular polygonal columnar units are not intended to be filled in with material, because otherwise the product will not have at least 50 % (vol. /vol.) voids. Particularly preferably, the product has 60 to 80 % (vol. / vol.) of voids. The product is required to consist essentially of the multiple layers as defined in claim 1, and therefore only minor amounts of additional material are envisaged as being present.

In one embodiment, there is a central area of the core which is made up of aligned hexagonal columnar units, while the remainder of the core (i.e. the edges of the core) comprises polygonal units having a suitable number of sides to pack the core. In other words, this combination of (a) hexagonal and (b) non-hexagonal polygonal columnar units fill the void of the core, such that it has a cross-section filled with honeycomb units (or cells). The non-hexagonal units may be part hexagons, e.g. half-hexagons, in cross sectional shape.

The skilled person will understand the concept of packing of shapes and will appreciate that polygons can be arranged and packed to fill a space. The void of the core, as defined by the encapsulating layer, is filled (packed) across its cross section with the non-spaced-apart closed-cellular polygonal columnar units stacked alongside one another.

Typically, the core comprises non-spaced-apart closed cellular polygonal, e.g. hexagonal, columnar units stacked alongside one another, with its operative height equal to the operative height of the core. The centre of the core is typically made up of hexagonally aligned units, while the edges of the core comprise polygonal units with a suitable number of sides to pack the core. These polygonal, e.g. hexagonal, columnar units are stacked alongside one another as well as stacked height-wise, to form plurality of layers, such that they pack the core in its entirety.

In at least one embodiment, the centre of the core is made up of hexagonally aligned units while the edges comprise polygonal units with a suitable number of sides to pack the core. These polygonal units may be hexagonal units for the most part, and portions thereof, to form the non-spaced-apart units filling in the core. These polygonal, e.g. hexagonal, columnar units may or may not be interconnected with each other.

Beneficially, the composite product of the invention reduces environmental impact as the present invention utilizes the waste plastic/ polyester felt.

Beneficially, the composite product with robust impact resistance of the invention is used in dynamic applications, including impeding impactor or projectile travelling at high speed or in aerospace, automotive or construction, etc.

In one embodiment, the mats, felts, fibers or fabrics of the synthetic polyester felt or the bi-directionally and/or uni-directionally oriented synthetic glass fabric are impregnated with resin system in an amount of at least 48% wt./wt. of the total weight of the product.

In the claimed invention, the core comprises multiple layers of the bi-directionally and/or uni-directionally oriented synthetic glass fabric impregnated with the resin system and of the synthetic polyester felt impregnated with the resin system.

More particularly, in one embodiment, the core comprises the multiple alternate layers of the bi-directionally and/or the uni-directionally oriented synthetic glass fabric impregnated with the resin system and the synthetic polyester felt impregnated with the resin system.

In the claimed invention, the encapsulating layer comprises multiple layers of the bi-directionally and/or uni-directionally oriented synthetic glass fabric impregnated with the resin system and of the synthetic polyester felt impregnated with the resin system.

Particularly, in one embodiment, the encapsulating layer comprises:
EITHER
   - a first and a last layer of the bi-directionally / uni-directionally oriented synthetic glass fabric impregnated with the resin system and in-between them are multiple layers of the synthetic polyester felt impregnated with the resin system;
OR
   - a first and a last layer of the synthetic polyester felt impregnated with the resin system and in-between them are multiple layers of the bi-directionally /uni-directionally oriented synthetic glass fabric impregnated with the resin system.
OR
   - a first multiple layers of the bi-directionally / uni-directionally oriented synthetic glass fabric impregnated with the resin system to form an outer peripheral thickness of the encapsulating layer and a last multiple layers of the synthetic polyester felt impregnated with the resin system to form an inner peripheral thickness of the encapsulating layer;
OR
   - a first multiple layers of the synthetic polyester felt impregnated with the resin system to form the outer peripheral thickness of the encapsulating layer and a last multiple layers of the bi-directionally / uni-directionally oriented synthetic glass fabric impregnated with the resin system to form the inner peripheral thickness of the encapsulating layer;
OR
   - multiple layers of the bi-directionally / uni-directionally oriented synthetic glass fabric impregnated with the resin system and the synthetic polyester felt impregnated with the resin system, having the bi- directionally / uni-directionally oriented synthetic glass fabric impregnated with the resin system as an outermost encapsulating layer;
OR
   - multiple layers of the bi-directionally / uni-directionally oriented synthetic glass fabric impregnated with the resin system and the synthetic polyester felt impregnated with the resin system, having the synthetic polyester felt impregnated with the resin system as an outermost encapsulating layer.

More particularly, in one embodiment the core layer comprises:
EITHER
   - a first multiple layers of the synthetic polyester felt impregnated with the resin system to form an outer core layer and a last multiple layers of the bi-directionally / uni- directionally oriented synthetic glass fabric impregnated with the resin system to form an inner core layer;
OR
   - a first multiple layers of the bi-directionally / uni-directionally oriented synthetic glass fabric impregnated with the resin system to form an outer core layer and a last multiple layers of the synthetic polyester felt impregnated with the resin system to form an inner core layer;
OR
   - multiple layers of the bi-directionally / uni-directionally oriented synthetic glass fabric impregnated with the resin system and the synthetic polyester felt impregnated with the resin system, having the synthetic polyester felt impregnated with the resin system as an outermost core layer;
OR
   - multiple layers of the bi-directionally / uni-directionally oriented synthetic glass fabric impregnated with the resin system and the synthetic polyester felt impregnated with the resin system, having the bi-directionally / uni-directionally oriented synthetic glass fabric impregnated with the resin system as an outermost core layer.

In one embodiment, the product of the invention has characteristic features of:
1. a peripheral thickness of the encapsulating layer is at least of 1.0 mm;
2. an inner vertical wall thickness of the hexagonal units of the core is at least of 1.0 mm; and
3. an inner slant wall thickness of the hexagonal units of the core is at least of 1.0 mm.

The peripheral thickness of the encapsulating layer is divided into an outer peripheral thickness and an inner peripheral thickness. The outer peripheral thickness and the inner peripheral thickness are preferably of at least 0.5 mm each.

These characteristic features may be tailored or engineered regarding its thickness and the sequence in which the synthetic polyester felt and the synthetic glass fabric are used therein, to control or tailor impact resistance of the product of the invention, stress, deflection, etc. as per the requirement of end applications.

Preferably, said synthetic glass fabric has a moisture content of 5 % or less, a weight of 200 to 1000 gm/m², or 200 to 500 gm/ m² and a tensile strength of 400 to 500 MPa.

It may be that the resin system used for impregnation of the synthetic polyester felt and the oriented synthetic glass fabric comprises: at least a resin; and a curing system comprising curing agent and accelerator.

The resin system used for impregnation of the synthetic polyester felt and the bi-directionally and/or the uni-directionally oriented synthetic glass fabric may comprise: at least a resin; a curing system comprising curing agent and accelerator; filler; thinner; and pigment or any other suitable additives. In one particular embodiment, the resin used in the resin system is either: a thermosetting resin selected from unsaturated polyester, epoxy, polyurethane, phenolic resins and mixture thereof; or a thermoplastic resin selected from polyethylene, polypropylene, acrylonitrile-butadiene-styrene, polyacetal, polyamide, polyimide, saturated polyester resins and mixtures thereof.

In one particular embodiment, the curing agent used in the resin system is selected from methyl ethyl ketone peroxide, cumene hydroperoxide, t-butyl hydroperoxide, benzoyl peroxide, and / or hydrogen peroxide.

In one particular embodiment, the accelerator used in the resin system is selected from cobalt naphthenate and/or cobalt octoate.

In one particular embodiment, the filler used in the resin system is calcium carbonate.

In one particular embodiment, the thinner used in the resin system is methanol.

Particularly, the resin systems that can suitably be used in the present invention are systems wherein:
a) the resin system comprises epoxy resin and hardner or curing agent in the ratio of 1:1 and 3: 1; and
b) the resin system comprises at least 100 pph of polyester resin, at least 1.7 pph of curing system, at least 2 pph of filler, and at least 10 pph of thinner.

In one particular embodiment, the resin system comprises 100 pph of polyester, 1.7 pph of a curing system comprising 0.2 pph of cobalt octoate and 1.5 pph of benzoyl peroxide, 2 pph of calcium carbonate and 10 pph of methanol.

The synthetic polyester felt used in the composite products of the invention may be in any form and may be made from plastic waste or polyester waste. More particularly, it may be in the form of a needle punched mat having a weight in the range of 400 to 1000 gm / m². The needle punched mat of synthetic polyester felt is suitably prepared from waste polyester felt, to reduce the cost of production. In an exemplary embodiment, the synthetic polyester felt, or the polyester felt mat, has a weight of from 400 to about 1000 GSM and may have following properties, namely: Mass (ASTM D 5261) 1000 GSM; Tensile Strength (Wide Width) (ASTM D 4595) 40 KN/m; Elongation (ASTM D 4595) 55%; Grab Tensile Strength (ASTM D 4632) 1850 N; Grab Tensile Elongation (ASTM D 4632) >55 %; CBR (ASTM D 6241) 4500 N; Opening Size (O90) (ASTM D 4751) 60 Microns; Thickness 4 mm; and Trap Tear (ASTM D 4533) 950 N.

### DETAILED DESCRIPTION OF THE ACCOMPANYING DRAWINGS

Figure 1 illustrates a profile of a honeycomb closed cellular composite product (100), where the core (101) comprises non-spaced-apart closed cellular polygonal units (101A) stacked alongside one another to fill the void of the core (101), which is enclosed in the encapsulating layer (102).

In at least an embodiment, these polygonal units (101) are units stacked alongside one another with its operative height equal to the operative height of the core (101).

In at least an embodiment, these polygonal units (101) are stacked alongside one another as well as stacked height-wise, to form a plurality of layers, such that they pack the core (101) in its entirety.

In at least an embodiment, the centre of the core is made of hexagonal units while the edges comprise polygonal units with suitable number of sides to pack the core in its entirety.

Typically, these polygonal units may be hexagonal units (101A) for the most part, and portions thereof, to form the non-spaced-apart honeycomb filling in the core (101).

These polygonal units (101A) may or may not be interconnected with each other.

Figure 2 illustrates a cross-sectional view of the profile of the honeycomb closed cellular composite product (100), wherein:
1. a peripheral thickness (D) of the encapsulating layer (102) is of at least 1.0 mm;
2. an inner vertical wall thickness (E) of the hexagonal units (101A) of the core (101) is of at least 1.0 mm; and
3. an inner slant wall thickness (F) of the hexagonal units (101A) of the core (101) is of at least of 1 mm.

Particularly, the peripheral thickness (D) of the encapsulating layer (102) may be in the range of 1.0 mm to 100 mm.

Particularly, the inner vertical wall thickness (E) of the hexagonal units (101A) of the core (101) may be in the range of 1.0 mm to 100 mm; and

Particularly, the inner slant wall thickness (F) of the hexagonal units (101A) of the core (101) may be in the range of 1.0 mm to 100 mm.

Particularly, the peripheral thickness (D) of the encapsulating layer may further be divided into an outer peripheral thickness (D1) of at least 0.5 mm, and an inner peripheral thickness (D2) of at least 0.5 mm.

The peripheral thickness (D) of the encapsulating layer including (D1) and (D2), the inner vertical wall thickness (E) and the inner slant wall thickness (F) of the polygonal, including hexagonal, units (101A) of the core (101), and the preferences in which the bi-directionally / uni-directionally oriented synthetic glass fabric impregnated with the resin system and the synthetic polyester felt impregnated with the resin system are used to form the core (101) and the encapsulating layer (102), are parameters that can be used to produce a composite product of the invention to have robust impact resistance and deflection with reduced stress. These parameters may be varied to control the impact resistance, stress and deflection.

The peripheral thickness (D) of the encapsulating layer including (D1) and (D2), the inner vertical wall thickness (E) and the inner slant wall thickness (F) of the polygonal including hexagonal units (101A) may be altered to any desired thickness depending upon the end applications.

The core (101) comprises the multiple layers of the bi-directionally and/or uni-directionally oriented synthetic glass fabric impregnated with the resin system and of the synthetic polyester felt impregnated with the resin system. In one embodiment the core (101) comprises multiple alternate layers of the bi-directionally / uni-directionally oriented synthetic glass fabric impregnated with the resin system and the synthetic polyester felt impregnated with the resin system.

The encapsulating layer (102) comprises multiple layers of the bi-directionally and/or uni-directionally oriented synthetic glass fabric impregnated with the resin system and of the synthetic polyester felt impregnated with the resin system. Particularly, in one embodiment the encapsulating layer (102) comprises EITHER a first and a last layer of the bi-directionally / uni-directionally oriented synthetic glass fabric impregnated with the resin system and in-between them are multiple layers of the synthetic polyester felt impregnated with the resin system; OR a first and a last layer of the synthetic polyester felt impregnated with the resin system and in-between them are multiple layers of the bi-directionally / uni-directionally oriented synthetic glass fabric impregnated with the resin system; OR a first multiple layers of the synthetic polyester felt impregnated with the resin system to form the outer peripheral thickness (D1) of the encapsulating layer and a last multiple layers of the bi-directionally /uni-directionally oriented synthetic glass fabric impregnated with the resin system to form the inner peripheral thickness (D2) of the encapsulating layer; OR a first multiple layers of the bi-directionally / uni-directionally oriented synthetic glass fabric impregnated with the resin system to form the outer peripheral thickness (D1) of the encapsulating layer and a last multiple layers of the synthetic polyester felt impregnated with the resin system to form the inner peripheral thickness (D2) of the encapsulating layer; OR multiple layers of the bi-directionally / uni-directionally oriented synthetic glass fabric impregnated with the resin system and the synthetic polyester felt impregnated with the resin system, having the bi-directionally / uni-directionally oriented synthetic glass fabric impregnated with the resin system as an outermost encapsulating layer; OR multiple layers of the bi-directionally / uni-directionally oriented synthetic glass fabric impregnated with the resin system and the synthetic polyester felt impregnated with the resin system, having the synthetic polyester felt impregnated with the resin system as an outermost encapsulating layer.

Preferably, the encapsulating layer (102) comprises: the first and the last layer of the bi-directionally / uni-directionally oriented synthetic glass fabric impregnated with the resin system and in-between them are multiple layers of the synthetic polyester felt impregnated with the resin system; OR the first multiple layers of the bi-directionally / uni-directionally oriented synthetic glass fabric impregnated with the resin system to form the outer peripheral thickness (D1) of the encapsulating layer and the last multiple layers of the synthetic polyester felt impregnated with the resin system to form the inner peripheral thickness (D2) of the encapsulating layer; OR multiple layers of the bi-directionally / uni-directionally oriented synthetic glass fabric impregnated with the resin system and the synthetic polyester felt impregnated with the resin system, having the bi-directionally / uni-directionally oriented synthetic glass fabric impregnated with the resin system as an outermost encapsulating layer.

According to the invention, there is provided a pultrusion apparatus for a continuous or a batch production of the honeycomb closed cellular composite product; particularly the composite product having the profile as shown in Figure 1.

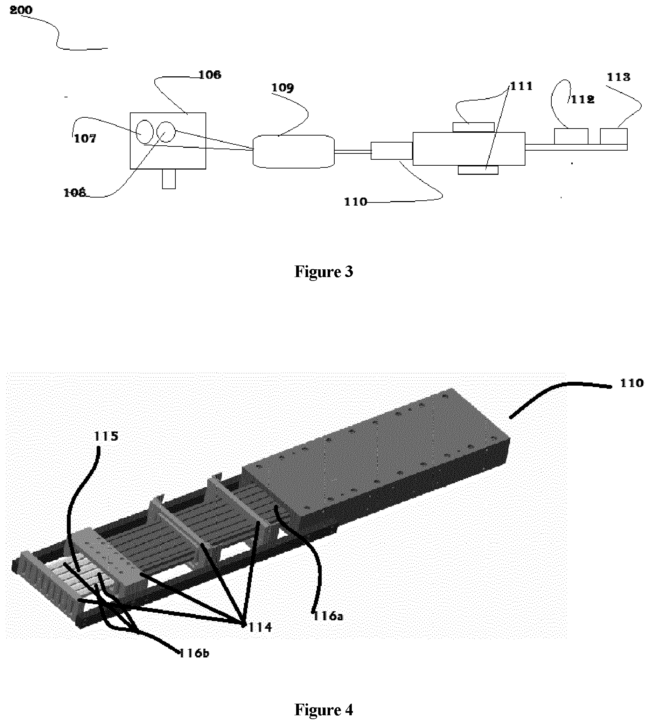

Figure 3 illustrates the pultrusion apparatus (200) for the continuous or the batch production of the honeycomb closed cellular composite product; particularly the composite product having profile as shown in Figure 1.

In Figure 3, at least one roller stand (106) is used in place of conventionally used creel stand. The roller stand occupies less space as compared to creel stand.

The pultrusion apparatus (200) for the continuous or the batch production of the honeycomb closed cellular composite product of the invention comprises:
at least one roller stand (106) provided with at least two roller means (107 and 108) to feed at least one synthetic polyester felt and at least one bi-directionally and/or uni-directionally oriented synthetic glass fabric;
a resin bath (109) comprising a resin system for impregnation of the fibers/ felt / fabric; the resin bath (109) is in a close proximity to the roller stand (106) so as to pass the polyester felt and the synthetic glass fabric through it to impregnate the same with the resin system;
a pultrusion die (110) comprises plurality of guides (114), plurality of floating mandrels (115) and a passage (116a) available between an inner surface of the die (110) and the mandrels (115) and plurality of passages (116b) between the mandrels (115); the pultrusion die (110) provided in a close proximity to the resin bath (109) to pass the resin impregnated fibers/ felts / fabrics through the guides (116) into the passages (116 - 116a and 116b) so as to simultaneously form a core (101) and an encapsulating layer (102) while arranging the encapsulating layer (102) to enclose over the core (101) and;
at least one heating mean (111), preferably heating plates provided to encapsulate the pultrusion die (110) to fuse closed cellular hexagonal columnar units to form the core (101) and also to fuse the encapsulating layer (102) to enclose the core (101); the pultrusion die (110) being activated by heating to transfer the honeycomb closed cellular composite product to further location;
at least one external pultrusion puller (112) provided in close proximity to the pultrusion die (110) to expel the honeycomb closed cellular composite product from the die (112); and
a cutter (113) provided at the end of the apparatus to cut the honeycomb closed cellular composite product of a desired length.

The product suitably has robust impact resistance at low cost and light weight.

Particularly, the product may have 50 to 70 % void vol./vol.

Typically, the impregnated mats, felts, fibers or fabrics are at least 48 % wt./wt. impregnated with the resin system of the total weight of the product.

Figure 4 illustrates the exploded view of the pultrusion die (110).

The pultrusion die (110) has a plurality of guides (114), plurality of floating mandrels (115), a passage (116a) available between an inner surface of the die (110) and the mandrels (115) and plurality of passages (116b) available between the mandrels (115) along their length. The floating mandrels (115) have elongated floating hexagonal shaped hollow mandrels. The guides (114) and floated mandrels (115) using the passages (116b) between the mandrels (115) along their length and the passage (116a) available between an inner surface of the die (110) and the mandrels (115) channelize to pass the felt and the synthetic fabric, both impregnated with the resin system, through the passages (116b) and the passage (116a) in a desired sequence so as to form simultaneously the core (101) and the encapsulating layer (102) respectively, and arranging the encapsulating layer (102) over the core (101) to enclose the core (101) with the encapsulating layer (102). The die (110) is encapsulating with heating plates (111) so as to maintain the die (110) at a temperature in the range of 110 to 130° C. The heating initiate curing so as to fuse polygonal columnar units, predominantly hexagonal units to form the core and also to fuse the encapsulating layer over the core.

The floating mandrel (115) has elongated floating hexagonal shaped hollow floating mandrel.

Typically, the resin bath (111) is operated at a speed of 2 to 6 meter per hour to impregnate the synthetic polyester felt and the oriented synthetic fabric with the resin system.

Typically, the pultrusion die (110) is operated at a speed of 2 to 6 meter per hour to process the impregnated felt and fabric with the resin system through it to obtain the honeycomb closed cellular composite product.

According to still another embodiment of the invention, there is provided a pultrusion method for production of the honeycomb closed cellular composite product of the invention by using the pultrusion apparatus (200) of the invention as illustrated in Figure 3.

In this method, the synthetic polyester felt and the bi-directionally and/or uni-directionally oriented synthetic glass fabric are provided by roller means (107, 108). These felts / fibers /fabrics are passed through the resin bath (109) comprising the resin system at speed of 2 to 6 meter per hour to impregnate them with the resin system followed by passing them at speed of 2 to 6 meter per hour through the pultrusion die (110) maintaining the temperature of 110 to 130° C by using the heating means (111). In the pultrusion die (110), the impregnated felt and oriented glass fabric with the resin system in a desired sequence are passed though the guides (114) followed through the passage (116a) available between the inner surface of the die (110) and the mandrels (115) and the passages (116b) between the mandrels (115) along the length of the die (110) to simultaneously form the encapsulating layer (102) and the core (101), particularly arranging the encapsulating layer (102) over the core (101) to enclose it. The core so obtained predominantly comprises non-spaced-apart closed cellular hexagonal columnar units (101A) stacked alongside one another to fill the void of the core (101) while the edges comprise polygonal units with a suitable number of sides to pack the core. The heating allows a curing leading to fusion of the closed columnar hexagonal units to form the core (101) and fusion of the encapsulating layer (102) over the core (101). The die (110) is activated by heating using the heating means (111) to transfer a cured pultruded honeycomb closed cellular composite product to expel out by using the external pultrusion puller (112). The product of the desired length is cut with the help of cutter (113).

According to the method of the present invention, the non-spaced-apart closed cellular polygonal units (101A) stacked alongside one another to form the core (101), which is enclosed in the encapsulating layer (102). The centre of the core is made of hexagonal columnar units while the edges comprise polygonal units with a suitable number of sides to pack the core. Particularly, these polygonal columnar units (101) are stacked alongside one another as well as stacked height-wise, to form a plurality of layers, such that they pack the core (101) in its entirety. These polygonal columnar units (101) may or may not be interconnected with each other. The polygonal columnar units, including hexagonal units (101), obtained according to the method of the invention have an inner vertical wall thickness (E) of at least 1 mm, typically in the range of 1 mm to 100 mm and an inner slant wall thickness (F) of at least 1 mm, typically 1 to 100 mm. The peripheral thickness (D) of the encapsulating layer is of at least 1 mm, typically 1 to 100 mm. Typically, the peripheral thickness (D) of the encapsulating layer may be further divided into an outer peripheral thickness (D1) of at least 0.5 mm; and an inner peripheral thickness (D2) of at least 0.5 mm.

The inner vertical wall thickness (E) and the inner slant wall thickness (F) of the core (101) and the peripheral thickness (D) including (D1) and (D2) of the encapsulating layer (102) of the honeycomb closed cellular composite product can be varied regarding thickness, and the preferences in which the bi-directionally and/or uni-directionally oriented synthetic glass fabric impregnated with the resin system and the synthetic polyester felt impregnated with the resin system are used to form the core (101) and the encapsulating layer (102), to tailor or control the properties, namely: impact resistance, deflection and stress of the product of the invention, in accordance to the requirement of the end applications, where it will be used.

According to one embodiment of the invention, there is provided the honeycomb closed cellular composite product comprising the synthetic polyester felt; the bi-directionally and/or uni-directionally oriented synthetic glass fabric; and the resin system;
where the product has the core (101) comprising non-spaced-apart closed cellular polygonal units (101A), predominantly hexagonal columnar units stacked alongside one another to fill the void of the core (101) while the edges of the core (101) comprise polygonal units with a suitable number of sides to pack the core (101);
where the core (101) and the encapsulating layer (102) are made up of the multiple layers of the bi-directionally and /or uni-directionally oriented synthetic glass fabric impregnated with the resin system and the synthetic polyester felt impregnated with the resin system,
where the product has 50 to 80 % void vol./vol.

The product may have robust impact resistance in terms of reduced stress, as minimal as 601 MPa, and reduced deflection, as minimal as 519.69 mm.

Particularly, the product has 60 to 80 % void vol. / vol.

The resistance, stress and deflection of the product is determined by tests carried out at a speed of 500 to 900 m/sec in air and applying the condition of base support or edge support by using "ANSYS" software by using parameters namely, Gruneisen Coefficient of 0.84, C1 of 3230, C2 of 0.9 and impactor speed of 900 m/s. It was found that the stress was as minimal as 601 MPa and the reduced stress was as minimal as 519.69 mm thus having robust impact resistance.

The technical advancement of the present invention over the existing products, including the composite product protected in Indian Patent Application No. 201621020446 (and the related PCT publication WO2017/216809 published December 21st 2017), is that the honeycomb closed cellular composite product of the invention has robust impact resistance with low stress, even at a speed of 900 m/sec, yet is a light weight and low cost product.

The product as well as the method of the invention can utilize minimum raw material, and can eliminate the wastage of material due to spilling, thus making it clean, cost effective and efficient.

The present invention enables the user to vary the inner vertical wall thickness (E) and the inner slant wall thickness (F) of the core (101) and the peripheral thickness (D) of the encapsulating layer (102) of the honeycomb closed cellular composite product, to tailor or engineer the end properties, namely: impact resistance, deflection and stress of the product of the invention, in accordance to the requirement of the end applications, e.g. impeding impactor or projectile travelling at high speed or in aerospace, automotive or construction, etc, where it will be used.

The present apparatus has a roller stand instead of creel stand for feeding felts / fibers / fabrics, which uses less space as compared to conventional creel stand. Thus, the current method reduces manufacturing cost, reduces environmental impact and improves composite products.

The composite product of the invention overcomes limitation of conventionally over-designed, heavy weight and costly composite products. Also, said product has an improved low ratio of weight to strength.

The method of the invention eliminates the use of conventional glass roving and overcomes the limitation of high pulling forces during pulling of glass roving in resin bath.

The present closed cellular composite product sustains high speed impact in X-Y and Z-Y planes. The presently invented method is a continuous or batch production method. The present method reduces manufacturing cost, because it can use waste plastic, reduces environmental impact and improves the impact resistance with high endurance in adverse environmental conditions.

### BEST MODE OR EXAMPLES FOR WORKING OF THE INVENTION

The present invention is described in the examples given below; these are provided only to illustrate the invention and therefore should not be construed to limit the scope of the invention.

### Example 1

A honeycomb closed cellular composite product was made with the width of 110 mm, length of 100 mm and height of 70 mm and having a number of honeycomb units (or cells) equal to 10. The total volume of the product is 7,70,000 mm³.

It was made up of bi-directional (0/90°) oriented glass fabric, synthetic polyester felt, and polyester resin system.

The polyester resin system used in the current example consisted of 100 pph of polyester, 1.7 pph of curing system comprising 0.2 pph of cobalt octoate and 1.5 pph of benzoyl peroxide, 2 pph of calcium carbonate and 10 pph of methanol.

The bidirectional (0/90°) oriented glass fabric has a weight of 200 to 1000 gm/m² and tensile strength of 400 to 500 MPa.

The polyester felt, in the form of a needle punched mat, is prepared from polyester waste. This mat has mass of 1000 GSM (ASTM D 5261); Tensile Strength of 40 KN/m (ASTM D 4595); Elongation of 55% (ASTM D 4595); Grab Tensile Strength of 1850 N (ASTM D 4632); Grab Tensile Elongation of >55 % (ASTM D 4632); CBR of 4500 N (ASTM D 6241); Opening Size (O90) of 60 Microns (ASTM D 4751); Thickness of 4 mm; and Trap Tear of 950 N (ASTM D 4533).

The sequence of the core comprises of multiple alternate layers of the bi-directionally (0/90°) oriented synthetic glass fabric impregnated with the polyester resin system and the synthetic polyester felt impregnated with the polyester resin system.

The sequence of the encapsulating layer comprises the first and the last layer being of the bi-directionally (0/90°) oriented synthetic glass fabric impregnated with the polyester resin system, and, in-between, multiple layers of the synthetic polyester felt impregnated with the polyester resin system. The polyester felts and the bi-directionally (0/90°) oriented glass fabrics of 200 gm /m² were provided by roller means (107 and 108). These felts and fabrics were impregnated by passing them at a speed of 4 meter per hour through the resin bath (109) comprising the polyester resin system. The impregnated fabrics and felts were passed through a floated pultrusion mandrel (110) at speed of 4 meter per hour and at a temperature of 110° C using heating means (111), to obtain a cured pultruded honeycomb closed cellular composite product. The cured product was expelled from the mandrel (110) with the help of an external pultrusion puller (112) and was cut at the length of 100 mm with the help of cutter (113).

The product has a peripheral thickness (D) of 5 mm; inner vertical wall thickness (E) of 5 mm; and inner slant wall thickness (F) of 2.5 mm.

The void volume of the product is 64.61 % by vol./vol.

The product was tested for equivalent stress and total deformation by "ANSYS" software by using parameters, namely: Gruneisen Coefficient of 0.84, C1 of 3230, C2 of 0.9 and impactor speed of 900 m/s by applying "base support" condition. The product was also tested by applying "support by the edges" condition. The results are incorporated in the Table 1.

### Example 2

A honeycomb closed cellular composite product was made with the width of 116 mm, length of 100 mm and height of 76 mm and having a number of honeycomb units equal to 10. The total volume of the product is 8,81,600 mm³.

It was made-up of bidirectional (0/90°) oriented glass fabric, synthetic polyester felt, and polyester resin system.

The polyester resin system used in the current example consisted of 100 pph of polyester, 1.7 pph of curing system comprising 0.2 pph of cobalt octoate and 1.5 pph of benzoyl peroxide, 2 pph of calcium carbonate and 10 pph of methanol.

The bidirectional (0/90°) oriented glass fabric has a weight of 200 to 1000 gm/m² and tensile strength of 400 to 500 MPa.

The polyester felt, in the form of a needle punched mat, is prepared from polyester waste. The mat has mass of 1000 GSM (ASTM D 5261); Tensile Strength of 40 KN/m (ASTM D 4595); Elongation of 55% (ASTM D 4595); Grab Tensile Strength of 1850 N (ASTM D 4632); Grab Tensile Elongation of >55 % (ASTM D 4632); CBR of 4500 N (ASTM D 6241); Opening Size (O90) of 60 Microns (ASTM D 4751); Thickness of 4 mm; and Trap Tear of 950 N (ASTM D 4533).

The sequence of the core comprises of multiple alternate layers of the bi-directionally (0/90°) oriented synthetic glass fabric impregnated with the polyester resin system and the synthetic polyester felt impregnated with the polyester resin system.

The sequence of the encapsulating layer comprises the first and the last layer being of the bi-directionally (0/90°) oriented synthetic glass fabric impregnated with the polyester resin system, and, in-between, multiple layers of the synthetic polyester felt impregnated with the polyester resin system. The product was made by following same method as described in Example 1.

The product has a peripheral thickness (D) of 8 mm; inner vertical wall thickness (E) of 5 mm; and inner slant wall thickness (F) of 2.5 mm.

The void volume of the product is 56.44 % by vol./vol.

The product was tested for equivalent stress and total deformation by "ANSYS" software by using parameters, namely: Gruneisen Coefficient of 0.84, C1 of 3230, C2 of 0.9 and impactor speed of 900 m/s by applying base support condition. The results are incorporated in the Table 1.

### Example 3

A honeycomb closed cellular composite product was made with the width of 110 mm, length of 100 mm and height of 70 mm and having a number of honeycomb units equal to 10. The total volume of the product is 7,70,000 mm³.

It was made-up of bidirectional (0/90°) oriented glass fabric, synthetic polyester felt, and polyester resin system.

The polyester resin system used in the current example consisted of 100 pph of polyester, 1.7 pph of curing system comprising 0.2 pph of cobalt octoate and 1.5 pph of benzoyl peroxide, 2 pph of calcium carbonate and 10 pph of methanol.

The bidirectional (0/90°) oriented glass fabric has a weight of 200 to 1000 gm/m² and tensile strength of 400 to 500 MPa.

The polyester felt, in the form of a needle punched mat, is prepared from polyester waste. The mat has mass of 1000 GSM (ASTM D 5261); Tensile Strength of 40 KN/m (ASTM D 4595); Elongation of 55% (ASTM D 4595); Grab Tensile Strength of 1850 N (ASTM D 4632); Grab Tensile Elongation of >55 % (ASTM D 4632); CBR of 4500 N (ASTM D 6241); Opening Size (O90) of 60 Microns (ASTM D 4751); Thickness of 4 mm; and Trap Tear of 950 N (ASTM D 4533).

The sequence of the core comprises of multiple alternate layers of the bi-directionally (0/90°) oriented synthetic glass fabric impregnated with the polyester resin system and the synthetic polyester felt impregnated with the polyester resin system.

The sequence of the encapsulating layer comprises the first and the last layer of the bi-directionally (0/90°) oriented synthetic glass fabric impregnated with the polyester resin system, and, in-between, multiple layers of the synthetic polyester felt impregnated with the polyester resin system.

The product was made by following same method as described in Example 1.

The product has a peripheral thickness (D) of 5 mm; the inner vertical wall thickness (E) of 8 mm; and the inner slant wall thickness (F) of 4 mm.

The void volume of the product is 57.36 % by vol./vol.

The product was tested for equivalent stress and total deformation by "ANSYS" software by using parameters, namely: Gruneisen Coefficient of 0.84, C1 of 3230, C2 of 0.9 and impactor speed of 900 m/s by applying base support condition. The results are incorporated in the Table 1.

### Example 4

A honeycomb closed cellular composite product was made with the width of 110 mm, length of 100 mm and height of 70 mm and having a number of honeycomb units equal to 27. The total volume of the product is 7,70,000 mm³.

It was made-up of bidirectional (0/90°) oriented glass fabric, synthetic polyester felt, and polyester resin system.

The polyester resin system used in the current example consisted of 100 pph of polyester, 1.7 pph of curing system comprising 0.2 pph of cobalt octoate and 1.5 pph of benzoyl peroxide, 2 pph of calcium carbonate and 10 pph of methanol.

The bidirectional (0/90°) oriented glass fabric has a weight of 200 to 1000 gm/m² and tensile strength of 400 to 500 MPa.

The polyester felt, in the form of a needle punched mat, is prepared from polyester waste. The mat has mass of 1000 GSM (ASTM D 5261); Tensile Strength of 40 KN/m (ASTM D 4595); Elongation of 55% (ASTM D 4595); Grab Tensile Strength of 1850 N (ASTM D 4632); Grab Tensile Elongation of >55 % (ASTM D 4632); CBR of 4500 N (ASTM D 6241); Opening Size (O90) of 60 Microns (ASTM D 4751); Thickness of 4 mm; and Trap Tear of 950 N (ASTM D 4533).

The sequence of the core comprises of multiple alternate layers of the bi-directionally (0/90°) oriented synthetic glass fabric impregnated with the polyester resin system and the synthetic polyester felt impregnated with the polyester resin system.

The sequence of the encapsulating layer comprises the first and the last layer of the bi-directionally (0/90°) oriented synthetic glass fabric impregnated with the polyester resin system, and, in-between, multiple layers of the synthetic polyester felt impregnated with the polyester resin system.

The product was made by following same method as described in Example 1.

The product has a peripheral thickness (D) of 5 mm; the inner vertical wall thickness (E) of 5 mm; and the inner slant wall thickness (F) of 2.5 mm.

The void volume of the product is 52.76 % by vol./vol.

The product was tested for equivalent stress and total deformation by "ANSYS" software by using parameters, namely: Gruneisen Coefficient of 0.84, C1 of 3230, C2 of 0.9 and impactor speed of 900 m/s by applying base support condition. The results are incorporated in the Table 1.

### Example 5

A honeycomb closed cellular composite product was made with the width of 110 mm, length of 100 mm and height of 70 mm and having a number of honeycomb units equal to 7. The total volume of the product is 7,70,000 mm³.

It was made-up of bidirectional (0/90°) oriented glass fabric, synthetic polyester felt, and polyester resin system.

The polyester resin system used in the current example consisted of 100 pph of polyester, 1.7 pph of curing system comprising 0.2 pph of cobalt octoate and 1.5 pph of benzoyl peroxide, 2 pph of calcium carbonate and 10 pph of methanol.

The bidirectional (0/90°) oriented glass fabric has a weight of 200 to 1000 gm/m² and tensile strength of 400 to 500 MPa.

The polyester felt, in the form of a needle punched mat, is prepared from polyester waste. The mat has mass of 1000 GSM (ASTM D 5261); Tensile Strength of 40 KN/m (ASTM D 4595); Elongation of 55% (ASTM D 4595); Grab Tensile Strength of 1850 N (ASTM D 4632); Grab Tensile Elongation of >55 % (ASTM D 4632); CBR of 4500 N (ASTM D 6241); Opening Size (O90) of 60 Microns (ASTM D 4751); Thickness of 4 mm; and Trap Tear of 950 N (ASTM D 4533).

The sequence of the core comprises of multiple alternate layers of the bi-directionally (0/90°) oriented synthetic glass fabric impregnated with the polyester resin system and the synthetic polyester felt impregnated with the polyester resin system.

The sequence of the encapsulating layer comprises the first and the last layer of the bi-directionally (0/90°) oriented synthetic glass fabric impregnated with the polyester resin system, and, in-between, multiple layers of the synthetic polyester felt impregnated with the polyester resin system.

The product was made by following same method as described in Example 1.

The product has a peripheral thickness (D) of 5 mm; the inner vertical wall thickness (E) of 5 mm; and the inner slant wall thickness (F) of 2.5 mm.

The void volume of the product is 66.73 % by vol./vol.

The product was tested for equivalent stress and total deformation by "ANSYS" software by using parameters, namely: Gruneisen Coefficient of 0.84, C1 of 3230, C2 of 0.9 and impactor speed of 900 m/s by applying base support condition. The results are incorporated in the Table 1.

### Example 6

A honeycomb closed cellular composite product was made with the width of 110 mm, length of 100 mm and height of 70 mm and having a number of honeycomb units equal to 10. The total volume of the product is 7,70,000 mm³.

It was made-up of unidirectional oriented glass fabric, synthetic polyester felt, and polyester resin system.

The polyester resin system used in the current example consisted of 100 pph of polyester, 1.7 pph of curing system comprising 0.2 pph of cobalt octoate and 1.5 pph of benzoyl peroxide, 2 pph of calcium carbonate and 10 pph of methanol.

The unidirectional oriented glass fabric has a weight of 200 to 1000 gm/m² and tensile strength of 400 to 500 MPa.

The polyester felt, in the form of a needle punched mat, is prepared from polyester waste. The mat has mass of 1000 GSM (ASTM D 5261); Tensile Strength of 40 KN/m (ASTM D 4595); Elongation of 55% (ASTM D 4595); Grab Tensile Strength of 1850 N (ASTM D 4632); Grab Tensile Elongation of >55 % (ASTM D 4632); CBR of 4500 N (ASTM D 6241); Opening Size (O90) of 60 Microns (ASTM D 4751); Thickness of 4 mm; and Trap Tear of 950 N (ASTM D 4533).

The sequence of the core comprises of multiple alternate layers of the unidirectional oriented synthetic glass fabric impregnated with the polyester resin system and the synthetic polyester felt impregnated with the polyester resin system.

The sequence of the encapsulating layer comprises first multiple layers of the unidirectional oriented synthetic glass fabric impregnated with the polyester resin system, to form a peripheral inner thickness of the encapsulating layer, followed by last multiple layers of the synthetic polyester felt impregnated with the polyester resin system, to form a peripheral outer thickness of the encapsulating layer.

The product was made by following same method as described in Example 1.

The product has a peripheral outer thickness (D1) of the encapsulating layer (102) of 2.5 mm made from the polyester felt impregnated with the resin system, and a peripheral inner thickness (D2) of the encapsulating layer (102) of 2.5 mm made from the unidirectional oriented synthetic glass fabric impregnated with the resin system; an inner vertical wall thickness (E) of 5 mm; and an inner slant wall thickness (F) of 2.5 mm.

The void volume of the product is 64.61 % by vol./vol.

The product was tested for equivalent stress and total deformation by "ANSYS" software by using parameters, namely: Gruneisen Coefficient of 0.84, C1 of 3230, C2 of 0.9 and impactor speed of 900 m/s by applying base support condition. The results are incorporated in the Table 1.

### Example 7

A honeycomb closed cellular composite product was made with the width of 110 mm, length of 100 mm and height of 70 mm and having a number of honeycomb units equal to 10. The total volume of the product is 7,70,000 mm³.

It was made-up of unidirectional oriented glass fabric, synthetic polyester felt, and the polyester resin system.

The polyester resin system used in the current example consisted of 100 pph of polyester, 1.7 pph of curing system comprising 0.2 pph of cobalt octoate and 1.5 pph of benzoyl peroxide, 2 pph of calcium carbonate and 10 pph of methanol.

The unidirectional oriented glass fabric has weight of 200 to 1000 gm/m² and tensile strength of 400 to 500 MPa.

The polyester felt, in the form of a needle punched mat, is prepared from polyester waste. The mat has mass of 1000 GSM (ASTM D 5261); Tensile Strength of 40 KN/m (ASTM D 4595); Elongation of 55% (ASTM D 4595); Grab Tensile Strength of 1850 N (ASTM D 4632); Grab Tensile Elongation of >55 % (ASTM D 4632); CBR of 4500 N (ASTM D 6241); Opening Size (O90) of 60 Microns (ASTM D 4751); Thickness of 4 mm; and Trap Tear of 950 N (ASTM D 4533).

The sequence of the core comprises of multiple alternate layers of the unidirectional oriented synthetic glass fabric impregnated with the polyester resin system and the synthetic polyester felt impregnated with the polyester resin system.

The sequence of the encapsulating layer comprises first multiple layers of the synthetic polyester felt impregnated with the polyester resin system to form a peripheral inner thickness of the encapsulating layer, followed by last multiple layers of the unidirectional oriented synthetic glass fabric impregnated with the polyester resin system to form a peripheral outer thickness of the encapsulating layer.

The product was made by following same method as described in Example 1.

The product has a peripheral outer thickness (D1) of the encapsulating layer of 2.5 mm, made from the unidirectional oriented synthetic glass fabric impregnated with the resin system; a peripheral inner thickness (D2) of the encapsulating layer of 2.5 mm, made from the polyester felt impregnated with the resin system; an inner vertical wall thickness (E) of 5 mm; and an inner slant wall thickness (F) of 2.5 mm.

The void volume of the product is 70 % by vol./vol.

The product was tested for equivalent stress and total deformation by "ANSYS" software by using parameters, namely: Gruneisen Coefficient of 0.84, C1 of 3230, C2 of 0.9 and impactor speed of 900 m/s by applying base support condition. The results are incorporated in the Table 1.

### Example 8 (Comparative Example)

A conventional honeycomb closed cellular steel product was made, with the width of 110 mm, length of 100 mm and height of 70 mm and having a number of honeycomb units equal to 10.

The product has a peripheral thickness (D) of 5 mm; the inner vertical wall thickness (E) of 5 mm; and the inner slant wall thickness (F) of 2.5 mm. The void volume of the product is 64.61% by vol./vol.

This conventional steel product is used for the comparative study.

The product was tested for equivalent stress and total deformation by "ANSYS" software by using parameters, namely: Gruneisen Coefficient of 0.84, C1 of 3230, C2 of 0.9 and impactor speed of 900 m/s by applying base support condition. The results are incorporated in the Table 1.

### Example 9 (Comparative Example)

A honeycomb closed cellular composite product was made with the width of 110 mm, length of 100 mm and height of 70 mm and having a number of honeycomb units equal to 10. The total volume of the product is 7,70,000 mm³.

It was made-up of bidirectional (0/90°) oriented glass fabric, synthetic polyester felt, and polyester resin system.

The polyester resin system used in the current example consisted of 100 pph of polyester, 1.7 pph of curing system comprising 0.2 pph of cobalt octoate and 1.5 pph of benzoyl peroxide, 2 pph of calcium carbonate and 10 pph of methanol.

The bidirectional (0/90°) oriented glass fabric has a weight of 200 to 1000 gm/m² and tensile strength of 400 to 500 MPa.

The polyester felt, in the form of a needle punched mat, is prepared from polyester waste. The mat has mass of 1000 GSM (ASTM D 5261); Tensile Strength of 40 KN/m (ASTM D 4595); Elongation of 55% (ASTM D 4595); Grab Tensile Strength of 1850 N (ASTM D 4632); Grab Tensile Elongation of >55 % (ASTM D 4632); CBR of 4500 N (ASTM D 6241); Opening Size (O90) of 60 Microns (ASTM D 4751); Thickness of 4 mm; and Trap Tear of 950 N (ASTM D 4533).

The sequence of the core comprises of multiple alternate layers of the bi-directionally (0/90°) oriented synthetic glass fabric impregnated with the polyester resin system and the synthetic polyester felt impregnated with the polyester resin system.

The sequence of the encapsulating layer comprises the first and the last layer of the bi-directionally (0/90°) oriented synthetic glass fabric impregnated with the polyester resin system, and, in-between, multiple layers of the synthetic polyester felt impregnated with the polyester resin system.

The product was made by following same method as described in Example 1 but neoprene rubber was then poured in the closed cellular hexagonal columnar units of the product and allowed to cure to obtain the honeycomb closed cellular composite product.

The product has a peripheral thickness (D) of 5 mm; the inner vertical wall thickness (E) of 5 mm; and the inner slant wall thickness (F) of 2.5 mm.

The void volume of the product is 0 % by vol./vol.

The product was tested for equivalent stress and total deformation by "ANSYS" software by using parameters, namely: Gruneisen Coefficient of 0.84, C1 of 3230, C2 of 0.9 and impactor speed of 900 m/s by applying base support condition. The results are incorporated in the Table 1.

**Table 1**

| **Example No.** | **Equivalent Stress** | **Deformation** |
|---|---|---|
| 1 Base support condition | 601.68 Mpa | 519.69 mm |
| 1 support by the edges condition | 656.88 MPa | 519.69 mm |
| 2 Base support condition | 691.85 MPa | 551.37 mm |
| 3 Base support condition | 902.65 MPa | 587.24 mm |
| 4 Base support condition | 728.32 MPa | 520.35 mm |
| 5 Base support condition | 688.34 MPa | 522.28 mm |
| 6 Base support condition | 712.74 MPa | 530.9 mm |
| 7 Base support condition | 633.34 MPa | 466.52 mm |
| 8 (comparative example) Base support condition | 726.37 MPa | 653.46 mm |
| 9 (comparative example) Base support condition | 706.78 MPa | 566.99 mm |

The composite pultruded products obtained according to examples 1 to 7 led to a significant reduction in weight as compared to that of the conventional honeycomb closed cellular steel product (comparative example 8), as well as compared to the composite product claimed in Indian Patent Application No. 201621020446 (and the related PCT publication WO2017/216809 published December 21st 2017), thereby leading to a significant cost reduction.

The composite product of example 1 has a most reduced stress in the range of 601 to 657 MPa and deformation of 519.69 mm.

The composite product according to example 2 has increased peripheral thickness of the encapsulating layer (102) but keeping the number of honeycomb units, inner vertical wall thickness and inner slant wall thickness the same as that of example 1; this product has a stress of 691.85 MPa and deformation of 551.37 mm.

The composite product according to example 3 has increased inner vertical wall thickness and increased inner slant wall thickness of the core (101), but keeping the number of honeycomb units and peripheral thickness the same as that of example 1; this product has a stress of 902.65 MPa and deformation of 587.24 mm.

The composite product according to example 4 has an increased number of honeycomb units, i.e. 27, but keeping the peripheral thickness, inner vertical wall thickness and inner slant wall thickness the same as that of example 1; this product has a stress of 728.32 MPa and deformation of 520.35 mm. The composite product according to example 5 has a decreased number of honeycomb units i.e. 7, but keeping the peripheral thickness, inner vertical wall thickness and inner slant wall thickness the same as that of example 1; this product has a stress of 688.34 MPa and deformation of 522.28 mm.

The composite product according to example 6 has a peripheral outer thickness (D1) of the encapsulating layer (102) of 2.5 mm made from unidirectional oriented synthetic glass fabric impregnated with the resin system and a peripheral inner thickness (D2) of the encapsulating layer (102) of 2.5 mm made from the polyester felt impregnated with the resin system but keeping the number of honeycomb units, inner vertical wall thickness and inner slant wall thickness the same as that of example 1; this product has a stress of 712.74 MPa and deformation of 530.9 mm.

The composite product according to example 7 has a peripheral outer thickness (D1) of the encapsulating layer (102) of 2.5 mm made from the polyester felt impregnated with the resin system and a peripheral inner thickness (D2) of the encapsulating layer (102) of 2.5 mm made from unidirectional oriented synthetic glass fabric impregnated with the resin system, but keeping the number of honeycomb units, inner vertical wall thickness and inner slant wall thickness the same as that of example 1; this product has a stress of 633.34 MPa and deformation of 466.52 mm.

The steel product according to comparative example 8 has the number of honeycomb units, peripheral thickness, inner vertical wall thickness and inner slant wall thickness the same as that of example 1; this product has a stress of 726.37 MPa and deformation of 653.46 mm.

The composite product according to example 9 has the number of honeycomb units, peripheral thickness, inner vertical wall thickness and inner slant wall thickness the same as that of example 1, but the cells are filled with rubber; this product has a stress of 706.78 MPa and deformation of 566.99 mm.

The products from examples 1, 2, 5 and 7 showed superior or robust impact resistance and shock dissipation and the least stress and deformation.

The composite product of the present invention where;
- the encapsulating layer comprises the first and the last layer of the bi-directionally (0/90°) oriented synthetic glass fabric impregnated with the polyester resin system, and, in-between, multiple layers of the synthetic polyester felt impregnated with the polyester resin system; and
- the peripheral outer thickness (D1) of the encapsulating layer of 2.5 mm made from the unidirectional oriented synthetic glass fabric impregnated with the resin system and the peripheral inner thickness (D2) of the encapsulating layer of 2.5 mm made from the polyester felt impregnated with the resin system;
demonstrated highest improvement in stress and deformation as well. These products have better improvement in shock dissipation.

The current invention has following advantages:
1. Low cost;
2. Easy processing system;
3. High toughening strength i.e. High Impact resistance;
4. Highly resilient;
5. Light weight ;
6. Utilizes 80% waste materials and hence eco-friendly;
7. Continuous production;
8. Less energy consumption and
9. High endurance when exposed to adverse environmental conditions.

The results illustrated in Table 1 unequivocally establish the superior traits of composite product prepared in accordance with the present invention as compared to conventional products.

## Claims

1. A honeycomb closed-cellular composite product (100) consisting essentially of
multiple layers of a synthetic polyester felt impregnated with a resin system,
and
multiple layers of synthetic glass fabric impregnated with a resin system, wherein the synthetic glass fabric is bi-directionally and/or uni-directionally oriented, arranged to form a core (101) and an encapsulating layer (102),
wherein the core comprises non-spaced-apart closed-cellular polygonal columnar units (101A) stacked alongside one another,
wherein the core comprises multiple layers of the synthetic polyester felt and of the synthetic glass fabric, and
wherein the encapsulating layer comprises multiple layers of the synthetic polyester felt and of the synthetic glass fabric.

2. The composite product according to claim 1, wherein the encapsulating layer (102) and the columnar units (101A) have the same dimension along their elongate length

3. The composite product according to claim 1 or claim 2, wherein the columnar units (101A) are stacked alongside one another to fill the void of the core, wherein the void of the core is the space enclosed in the encapsulating layer, and wherein the product has at least 50 % (vol. /vol.) voids.

4. The composite product according to any one of claims 1, 2 or 3, wherein a central area of the core (101) is made up of aligned hexagonal columnar units while the edges of the core comprise polygonal units having a suitable number of sides to pack the core.

5. The composite product according to any one of the preceding claims, wherein the polygonal columnar units (101A) are: (a) interconnected with each other, or (b) not interconnected with each other.

6. The composite product according to any one of the preceding claims, wherein the product has from 50% to 70% (vol. /vol.) voids.

7. The composite product according to any one of the preceding claims, wherein the impregnated felts and fibers are impregnated with the resin system such that the resin system is present in an amount of at least 48 %, wt./wt., of the total weight of the product.

8. The composite product according to any one of the preceding claims, wherein the product has the characteristic features of:
a. a peripheral thickness (D) of the encapsulating layer of at least of 1 mm;
b. an inner vertical wall thickness (E) of hexagonal units in the core of at least of 1 mm; and
c. an inner slant wall thickness (F) of hexagonal units in the core of at least of 1 mm

9. The composite product according to any one of the preceding claims, wherein the synthetic glass fabric has a moisture content of 5 % or less, a weight of 200 to 1000 gm/m², or 200 to 500 gm/ m² , and a tensile strength of 400 to 500 MPa.

10. The composite product according to any one of the preceding claims, wherein the synthetic polyester felt has a weight in the range of 400 to 1000 gm / m² and is prepared from plastic or polyester waste.

11. The composite product according to any one of the preceding claims, wherein the resin system comprises at least: a resin; a curing system comprising curing agent and accelerator; filler; thinner; and optionally pigment or any other suitable additives.

12. A pultrusion apparatus suitable for continuous or batch production of a honeycomb closed-cellular composite product as defined in any one of the preceding claims, said apparatus comprising:
i. at least one roller stand (106) provided with at least two roller means (107, 108) configured to feed at least one synthetic polyester felt and at least one bi-directionally and/or uni-directionally oriented synthetic glass fabric;
ii. a resin bath (109) comprising a resin system for impregnation of the felt and fabric; the resin bath (109) being placed in close proximity to the roller stand (106) so as to allow the polyester felt and the synthetic glass fabric to pass through it to impregnate the same with the resin system;
iii. a pultrusion die (110) comprising a plurality of guides (114), a plurality of floating mandrels (115), a passage (116a) between an inner surface of the pultrusion die (110) and the mandrels (115), and passages (116b) between the plurality of mandrels (115); the pultrusion die (110) being provided in close proximity to the resin bath (109) so as to allow the resin impregnated felt and fabric to pass through the guides (114) into the passages (116a, 116b) so as to simultaneously form a core (101) and an encapsulating layer (102) while arranging the encapsulating layer (102) to enclose over the core (101);
iv. at least one heating means (111), preferably heating plates, provided to encapsulate the pultrusion die (110) so as to allow closed cellular hexagonal columnar units to fuse to form the core (101) and also to allow the encapsulating layer (102) to fuse to enclose the core (101); the pultrusion die (110) being configured so that it is activated by heating to transfer the honeycomb closed cellular composite product to a further location;
v. at least one external pultrusion puller (112) provided in close proximity to the pultrusion die (110) so as to allow the honeycomb closed cellular composite product to be expelled from the die (112); and
vi. a cutter (113) provided at the end of the apparatus, so as to allow the honeycomb closed cellular composite product to be cut to a desired length.

13. The apparatus according to in claim 12, wherein the die (110) is configured to be maintained at a temperature in the range of 110 to 130° C by using the heating plates (111).

14. A pultrusion method for production of a honeycomb closed-cellular composite product as defined in any one of claims 1-11, by using the pultrusion apparatus (200) as defined in claim 12 or claim 13, wherein the method comprises:
A. providing synthetic polyester felt and bi-directionally and/or uni-directionally oriented synthetic glass fabric by roller means (107, 108);
B. passing the felt and fabric through the resin bath (109) comprising the resin system at a speed of 2 to 6 meters per hour to impregnate said felt and fabric with the resin system;
C. passing the impregnated felt and fabric through the pultrusion die (110) at speed of 2 to 6 meters per hour, maintaining the temperature of 110 to 130° C by using the heating means (111), to obtain a cured pultruded honeycomb closed cellular composite product;
D. expelling the cured pultruded honeycomb closed cellular composite product by using the external pultrusion puller (112); and
E. cutting the product to the desired length with the help of cutter (113).

15. The method according to claim 14, wherein the felt and oriented glass fabric impregnated with the resin system are passed in a desired sequence though the plurality of guides (114) of the pultrusion die (110), followed by passing through the passage (116a) available between an inner surface of the die (110) and the mandrels (115) and the plurality of passages (116b) between the mandrels (115) along the length of the die (110) to simultaneously form the encapsulating layer (102) and the core (101), particularly arranging the encapsulating layer (102) over the core (101) to enclose it; wherein the core comprises a central area with non-spaced-apart closed cellular hexagonal columnar units (101A) stacked alongside one another to fill the void of the core (101) while the edges of the core comprise polygonal units with a suitable number of sides to pack the core.

## Patentansprüche

1. Ein geschlossenzelliges Wabenverbundprodukt (100), im Wesentlichen bestehend aus:
mehreren Schichten eines synthetischen Polyesterfilzes, der mit einem Harzsystem imprägniert ist, und
mehreren Schichten von synthetischem Glasgewebe, imprägniert mit einem Harzsystem,
wobei das synthetische Glasgewebe bidirektional und/oder unidirektional orientiert ist und so angeordnet ist, dass es einen Kern (101) und eine Kapselungsschicht (102) bildet, wobei der Kern unbeabstandete, geschlossenzellige, polygonale Säuleneinheiten (101A) umfasst, die nebeneinander gestapelt sind,
wobei der Kern mehrere Schichten des synthetischen Polyesterfilzes und des synthetischen Glasgewebes umfasst, und
wobei die Kapselungsschicht mehrere Schichten des synthetischen Polyesterfilzes und des synthetischen Glasgewebes umfasst.

2. Verbundprodukt nach Anspruch 1, wobei die Kapselungsschicht (102) und die Säuleneinheiten (101A) entlang ihrer Länge in Längsrichtung die gleiche Abmessung aufweisen.

3. Verbundprodukt nach Anspruch 1 oder Anspruch 2, wobei die Säuleneinheiten (101A) nebeneinander gestapelt sind, um den Hohlraum des Kerns zu füllen, wobei der Hohlraum des Kerns der in der Kapselungsschicht eingeschlossene Raum ist und wobei das Produkt zu mindestens 50 Vol.-% Hohlräume aufweist.

4. Verbundprodukt nach einem der Ansprüche 1, 2 oder 3, wobei ein zentraler Bereich des Kerns (101) aus ausgerichteten sechseckigen Säuleneinheiten besteht, während die Kanten des Kerns aus polygonalen Einheiten bestehen, die eine geeignete Anzahl von Seiten zum Packen des Kerns aufweisen.

5. Verbundprodukt nach einem der vorhergehenden Ansprüche, wobei die polygonalen Säuleneinheiten (101A) (a) miteinander verbunden sind oder (b) nicht miteinander verbunden sind.

6. Verbundprodukt nach einem der vorhergehenden Ansprüche, wobei das Produkt zu 50 bis 70 Vol.-% Hohlräume aufweist.

7. Verbundprodukt nach einem der vorhergehenden Ansprüche, wobei die imprägnierten Filze und Fasern so mit dem Harzsystem imprägniert sind, dass das Harzsystem in einer Menge von mindestens 48 Gew.-% des Gesamtgewichts des Produkts vorliegt.

8. Verbundprodukt nach einem der vorhergehenden Ansprüche, wobei das Produkt die folgenden charakteristischen Merkmale aufweist:
a. eine Umfangsstärke (D) der Kapselungsschicht von mindestens 1 mm:
b. eine innere vertikale Wandstärke (E) der sechseckigen Einheiten im Kern von mindestens 1 mm; und
c. eine innere Schrägwandstärke (F) der sechseckigen Einheiten im Kern von mindestens 1 mm.

9. Verbundprodukt nach einem der vorhergehenden Ansprüche, wobei das synthetische Glasgewebe einen Feuchtigkeitsgehalt von höchstens 5 %, ein Gewicht von 200 bis 1000 g/m² oder 200 bis 500 g/m² und eine Zugfestigkeit von 400 bis 500 MPa aufweist.

10. Verbundprodukt nach einem der vorhergehenden Ansprüche, wobei der synthetische Polyesterfilz ein Gewicht im Bereich von 400 bis 1000 g/m² aufweist und aus Kunststoff- oder Polyesterabfällen hergestellt wird.

11. Verbundprodukt nach einem der vorhergehenden Ansprüche, wobei das Harzsystem mindestens Folgendes umfasst: ein Harz; ein Härtungssystem, umfassend Härtungsmittel und Beschleuniger; Füllstoff; Verdünner; und optional Pigment oder andere geeignete Zusatzstoffe.

12. Eine Pultrusionsvorrichtung, geeignet für die kontinuierliche oder diskontinuierliche Herstellung eines geschlossenzelligen Wabenverbundprodukts gemäß einem der vorhergehenden Ansprüche, die Vorrichtung umfassend:
i. mindestens ein Walzengestell (106), ausgestattet mit mindestens zwei Walzenmitteln (107, 108), konfiguriert zum Zuführen von mindestens einem synthetischen Polyesterfilz und mindestens einem bidirektional und/oder unidirektional ausgerichteten synthetischen Glasgewebe;
ii. ein Harzbad (109), umfassend ein Harzsystem zum Imprägnieren des Filzes und des Gewebes; wobei das Harzbad (109) in unmittelbarer Nähe des Walzengestells (106) angeordnet ist, um den Durchtritt des Polyesterfilzes und des synthetischen Glasgewebes zu ermöglichen, um diese mit dem Harzsystem zu imprägnieren;
iii. eine Pultrusionsdüse (110), umfassend eine Vielzahl von Führungen (114), eine Vielzahl von schwimmenden Dornen (115), einen Durchlass (116a) zwischen einer Innenoberfläche der Pultrusionsdüse (110) und den Dornen (115) und Durchlässe (116b) zwischen der Vielzahl von Dornen (115); wobei die Pultrusionsdüse (110) in unmittelbarer Nähe zum Harzbad (109) bereitgestellt ist, um zu ermöglichen, dass der Filz und das Harz, die mit Harz imprägniert sind, durch die Führungen (114) in die Durchlässe (116a, 116b) gelangt, um so gleichzeitig einen Kern (101) und eine Kapselungsschicht (102) auszubilden, wobei die Kapselungsschicht (102) so angeordnet ist, dass sie über dem Kern (101) abschließt;
iv. mindestens ein Heizmittel (111), vorzugsweise Heizplatten, bereitgestellt zum Einkapseln der Pultrusionsdüse (110), um die Verschmelzung geschlossenzelliger sechseckiger Säuleneinheiten zu ermöglichen, um den Kern (101) auszubilden, und um auch zu ermöglichen, dass die Kapselungsschicht (102) verschmilzt, um den Kern (101) einzuschließen; wobei die Pultrusionsdüse (110) dazu konfiguriert ist, durch Erhitzen aktiviert zu werden, um das geschlossenzellige Wabenverbundprodukt an einen anderen Ort zu transferieren;
v. mindestens einen externen Pultrusionszieher (112), bereitgestellt in unmittelbarer Nähe der Pultrusionsdüse (110), um zu ermöglichen, dass das geschlossenzellige Wabenverbundprodukt aus der Düse (112) ausgestoßen wird; und
vi. eine Schneidvorrichtung (113), bereitgestellt am Ende der Vorrichtung, um zu ermöglichen, dass das geschlossenzellige Wabenverbundprodukt auf die gewünschte Länge geschnitten wird.

13. Vorrichtung nach Anspruch 12, wobei die Düse (110) dazu konfiguriert ist, durch Verwendung der Heizplatten (111) auf einer Temperatur im Bereich von 110 bis 130 °C gehalten zu werden.

14. Pultrusionsverfahren zum Erzeugen eines geschlossenzelligen Wabenverbundprodukts nach einem der Ansprüche 1-11 unter Verwendung der Pultrusionsvorrichtung (200) nach Anspruch 12 oder 13, wobei das Verfahren Folgendes umfasst:
A. Bereitstellen von synthetischem Polyesterfilz und bidirektional und/oder unidirektional ausgerichtetem synthetischen Glasgewebe durch Walzenmittel (107, 108);
B. Führen des Filzes und des Gewebes durch das Harzbad (109), das das Harzsystem umfasst, mit einer Geschwindigkeit von 2 bis 6 Metern pro Stunde, um den Filz und das Gewebe mit dem Harzsystem zu imprägnieren;
C. Führen des imprägnierten Filzes und Gewebes durch die Pultrusionsdüse (110) mit einer Geschwindigkeit von 2 bis 6 Metern pro Stunde, wobei die Temperatur von 110 bis 130 °C unter Verwendung der Heizeinrichtung (111) aufrechterhalten wird, um ein ausgehärtetes, pultrudiertes geschlossenzelliges Wabenverbundprodukt erhalten;
D. Ausstoßen des ausgehärteten, pultrudierten, geschlossenzelligen Wabenverbundprodukts unter Verwendung des externen Pultrusionsziehers (112); und
E. Schneiden des Produkts mithilfe der Schneidvorrichtung (113) auf die gewünschte Länge.

15. Verfahren nach Anspruch 14, wobei der Filz und das orientierte Glasgewebe, die mit dem Harzsystem imprägniert sind, in einer gewünschten Reihenfolge durch die Vielzahl von Führungen (114) der Pultrusionsdüse (110) geführt werden. gefolgt vom Durchlaufen des Durchlasses (116a), der verfügbar ist zwischen einer Innenoberfläche der Düse (110) und den Dornen (115) und der Vielzahl von Durchlässen (116b) zwischen den Dornen (115) entlang der Länge der Düse (110), um gleichzeitig die Kapselungsschicht (102) und den Kern (101) auszubilden, insbesondere Anordnen der Kapselungsschicht (102) über dem Kern (101), um ihn einzuschließen; wobei der Kern einen zentralen Bereich mit unbeabstandeten, geschlossenzelligen, sechseckigen Säuleneinheiten (101A) umfasst, die nebeneinander gestapelt sind, um den Hohlraum des Kerns (101) zu füllen, während die Kanten des Kerns polygonale Einheiten mit einer geeigneten Anzahl von Seiten zum Packen des Kerns umfassen.

## Revendications

1. Produit composite en nid d'abeilles à cellules fermées (100) consistant essentiellement en :
de multiples couches d'un feutre de polyester synthétique imprégné avec un système de résine,
et
de multiples couches de tissu de verre synthétique imprégné avec un système de résine, le tissu de verre synthétique présentant une orientation bidirectionnelle et/ou unidirectionnelle,
agencées pour former une âme (101) et une couche d'encapsulation (102),
dans lequel l'âme comprend des unités colonnaires polygonales à cellules fermées non espacées (101A) empilées les unes à côté des autres,
dans lequel l'âme comprend de multiples couches du feutre de polyester synthétique et du tissu de verre synthétique, et
dans lequel la couche d'encapsulation comprend de multiples couches du feutre de polyester synthétique et du tissu de verre synthétique.

2. Produit composite selon la revendication 1, dans lequel la couche d'encapsulation (102) et les unités colonnaires (101A) ont la même dimension le long de leur longueur allongée.

3. Produit composite selon la revendication 1 ou la revendication 2, dans lequel les unités colonnaires (101A) sont empilées les unes à côté des autres pour remplir le vide de l'âme, dans lequel le vide de l'âme est l'espace enfermé dans la couche d'encapsulation, et dans lequel le produit a au moins 50 % (vol./vol.) de vides.

4. Produit composite selon l'une quelconque des revendications 1, 2 et 3, dans lequel une zone centrale de l'âme (101) est constituée d'unités colonnaires hexagonales alignées tandis que les bords de l'âme comprennent des unités polygonales ayant un nombre approprié de côtés pour garnir l'âme.

5. Produit composite selon l'une quelconque des revendications précédentes, dans lequel les unités colonnaires polygonales (101A) sont : (a) interconnectées les unes avec les autres, (b) non interconnectées les unes avec les autres.

6. Produit composite selon l'une quelconque des revendications précédentes, le produit ayant de 50 % à 70 % (vol./vol.) de vides.

7. Produit composite selon l'une quelconque des revendications précédentes, dans lequel les feutres et fibres imprégnés sont imprégnés avec le système de résine de telle sorte que le système de résine est présent dans une quantité d'au moins 48 %, pds/pds, du poids total du produit.

8. Produit composite selon l'une quelconque des revendications précédentes, le produit ayant les éléments caractéristiques suivants :
a. une épaisseur périphérique (D) de la couche d'encapsulation d'au moins 1 mm ;
b. une épaisseur de paroi interne verticale (E) d'unités hexagonales dans l'âme d'au moins 1 mm ; et
c. une épaisseur de paroi interne inclinée (F) d'unités hexagonales dans l'âme d'au moins 1 mm.

9. Produit composite selon l'une quelconque des revendications précédentes, dans lequel le tissu de verre synthétique a un taux d'humidité de 5 % ou moins, un poids de 200 à 1000 g/m², ou 200 à 500 g/m², et une résistance à la traction de 400 à 500 MPa.

10. Produit composite selon l'une quelconque des revendications précédentes, dans lequel le feutre de polyester synthétique a un poids dans la fourchette de 400 à 1000 g/m² et est préparé à partir de déchets de plastique ou de polyester.

11. Produit composite selon l'une quelconque des revendications précédentes, dans lequel le système de résine comprend au moins : une résine ; un système durcisseur comprenant un durcisseur et un accélérateur ; une charge ; un épaississant ; et éventuellement un pigment ou tout autre additif approprié.

12. Appareil de pultrusion approprié pour la production continue ou par lots d'un produit composite en nid d'abeilles à cellules fermées tel que défini dans l'une quelconque des revendications précédentes, ledit appareil comprenant :
i. au moins un banc de rouleaux (106) pourvu d'au moins deux moyens de rouleau (107, 108) configurés pour faire avancer au moins un feutre de polyester synthétique et au moins un tissu de verre synthétique à orientation bidirectionnelle et/ou unidirectionnelle ;
ii. un bain de résine (109) comprenant un système de résine pour imprégnation du feutre et du tissu ; le bain de résine (109) étant placé à proximité étroite du banc de rouleaux (106) de manière à permettre au feutre de polyester et au tissu de verre synthétique de le traverser pour imprégner ceux-ci avec le système de résine ;
iii. une filière de pultrusion (110) comprenant une pluralité de guides (114), une pluralité de mandrins flottants (115), un passage (116a) entre une surface interne de la filière de pultrusion (110) et les mandrins (115), et des passages (116b) entre la pluralité de mandrins (115) ; la filière de pultrusion (110) étant disposée à proximité étroite du bain de résine (109) de manière à permettre au feutre et au tissu imprégnés de résine de passer à travers les guides (114) jusqu'à l'intérieur des passages (116a, 116b) de manière à former simultanément une âme (101) et une couche d'encapsulation (102) tout en agençant la couche d'encapsulation (102) pour qu'elle enferme l'âme (101) ;
iv. au moins un moyen de chauffage (111), de préférence des plaques chauffantes, disposées pour encapsuler la filière de pultrusion (110) de manière à permettre à des unités colonnaires hexagonales à cellules fermées de fusionner pour former l'âme (101) et également pour permettre à la couche d'encapsulation (102) de fusionner pour enfermer l'âme (101) ; la filière de pultrusion (110) étant configurée de telle sorte qu'elle est activée par chauffage pour transférer le produit composite en nid d'abeilles à cellules fermées jusqu'à un autre emplacement ;
v. au moins une tireuse de pultrusion externe (112) disposée à proximité étroite de la filière de pultrusion (110) de manière à permettre au produit composite en nid d'abeilles à cellules fermées d'être expulsé de la filière (112) ; et
vi. un couteau (113) disposé à l'extrémité de l'appareil, de manière à permettre au produit composite en nid d'abeilles à cellules fermées d'être coupé à une longueur souhaitée.

13. Appareil selon la revendication 12, dans lequel la filière (110) est configurée pour être maintenue à une température dans la fourchette de 110 à 130 °C au moyen des plaques chauffantes (111).

14. Procédé de pultrusion pour la production d'un produit composite en nid d'abeilles à cellules fermées tel que défini dans l'une quelconque des revendications 1 à 11, au moyen de l'appareil de pultrusion (200) tel que défini dans la revendication 12 ou la revendication 13, le procédé comprenant :
A. la fourniture de feutre de polyester synthétique et de tissu de verre synthétique à orientation bidirectionnelle et/ou unidirectionnelle par des moyens de rouleau (107, 108) ;
B. le passage du feutre et du tissu à travers le bain de résine (109) comprenant le système de résine à une vitesse de 2 à 6 mètres par heure pour imprégner lesdits feutre et tissu avec le système de résine ;
C. le passage du feutre et du tissu imprégnés à travers la filière de pultrusion (110) à une vitesse de 2 à 6 mètres par heure, en maintenant la température de 110 à 130 °C à l'aide des moyens de chauffage (111), pour obtenir un produit composite en nid d'abeilles à cellules fermées pultrudé durci ;
D. l'expulsion du produit composite en nid d'abeilles à cellules fermées pultrudé durci au moyen de la tireuse de pultrusion externe (112) ; et
E. la découpe du produit à la longueur souhaitée à l'aide du couteau (113).

15. Procédé selon la revendication 14, dans lequel le feutre et le tissu de verre orienté imprégnés avec le système de résine sont passés dans une séquence souhaitée à travers la pluralité de guides (114) de la filière de pultrusion (110), puis passés à travers le passage (116a) disponible entre une surface interne de la filière (110) et les mandrins (115) et la pluralité de passage (116b) entre les mandrins (115) le long de la longueur de la filière (110) pour former simultanément la couche d'encapsulation (102) et l'âme (101), en particulier en agençant la couche d'encapsulation (102) sur l'âme (101) pour l'enfermer ; dans lequel l'âme comprend une zone centrale avec des unités colonnaires hexagonales à cellules fermées non espacées (101A) empilées les unes à côté des autres pour remplir le vide de l'âme (101) tandis que les bords de l'âme comprennent des unités polygonales avec un nombre approprié de côtés pour garnir l'âme.
